# EUROPEAN PATENT APPLICATION

(11) **EP 1 175 031 A2**
(43) Date of publication of application: **23.01.2002**
(21) Application number: 01306140.3
(22) Date of filing: 17.07.2001
(51) Int. Cl.: H04J 11/00, H04B 7/26

(54) **CDMA spreading method and communication terminal apparatus**

(30) Priority: 18.07.2000 JP 2000216776
(71) Applicant: SONY CORPORATION, Tokyo 141 (JP)
(72) Inventor: Iida, Sachio, Shinagawa-ku, Tokyo (JP)
(74) Representative: DeVile, Jonathan Mark, Dr.

(57) **Abstract**

A communication terminal apparatus for generating multiplex data by performing multiple code multiplex of a plurality of data channels (DPDCHn: n indicates channel number) and a control channel (DPCCH) by means of orthogonal codes and for performing transmission control of a signal consisting of the multiplex data to transmit a transmission signal, the apparatus comprising: reception means for receiving data symbols of the plural data channels and the control channel; orthogonal code generation means for generating the orthogonal codes having a same spreading factor (SF); first multiplication means for multiplying each of the data symbols of the plural data channels by orthogonal codes having a code number k being a positive integer within an extent of 0 ≤ k ≤ (SF/2) - 1 among the orthogonal codes; multiplex data generation means for generating multiplex data by multiplexing multiplication results generated by the first multiplication means; transmission control means for generating the transmission signal by performing transmission control of the signal consisting of the multiplex data; and signal output means for outputting the transmission signal. Accordingly a CDMA terminal apparatus may be configured to provide: a 0^{th} orthogonal code (Cch, 256, 0) for the spreading factor of 256 multiplied by a control channel (DPCCH); a 1^{st} orthogonal code (Cch, 4, 1) for the spreading factor of 4 multiplied by a first data channel (DPDCH₁) and a second data channel (DPDCH₂); a 0^{th} orthogonal code (Cch, 4, 0) for the spreading factor of 4 multiplied by a third data channel (DPDCH₃); and the multiple code multiplex or arranged to transmit the spread channels.

## Description

### BACKGROUND OF THE INVENTION

### 1. Field of the Invention

The present invention relates to CDMA spreading methods and communication terminal apparatus for transmitting a data channel and a control channel in a multiple code multiplex form.

### 2. Description of the Related Art

The third generation mobile communications system adopts a code division multiple access (CDMA) system. A terminal apparatus using the CDMA system spreads the spectra of transmission signals to broad bands to transmit them by calculating the product of transmission symbols and spread codes consisting of orthogonal codes and scramble codes. Here, ratio of a spread code speed and a transmission symbol speed is called as a spreading factor (SF).

The CDMA terminal apparatus identifies users by the use of a different scramble code to each user, and identifies a plurality of channels for single user by the use of a different orthogonal code to each channel. Because the speed of the maximum transmission symbols that may be transmitted per one channel is 960 kbps and the spread code speed is 3.84 Mcps (chip per second), the spreading factor in this case is 4. The information speed at this time is 384 kbps. In the case where the transmission is performed at the information speed larger than 384 kbps, the transmission may be performed by multiple code multiplex by means of different orthogonal codes. For example, when a number of data channels is two, the information speed becomes 768 kbps at the maximum; and when the number is three, the information speed becomes 1152 kbps at the maximum.

The following paragraphs provide an indication of a technical problem to which the present invention is directed and an indication at least in part of a solution provided by embodiments of the invention.

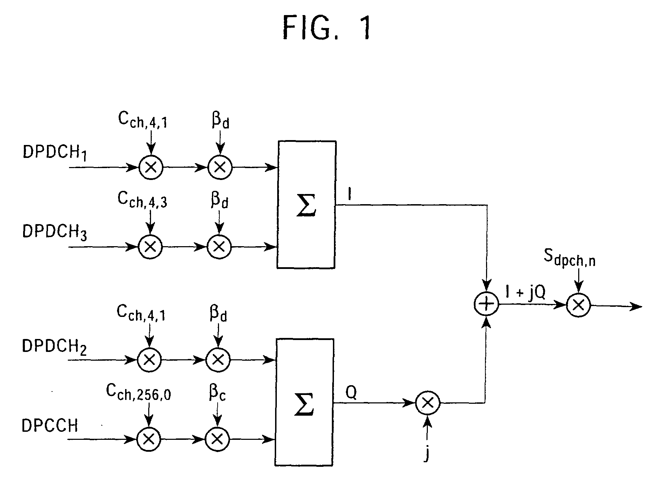

Figure 1 shows one configuration example of a multiple code multiplex. The configuration is for transmission of a control channel (DPCCH) and three data channels (DPDCH₁ to DPDCH₃) after being multiplexed by multiple code multiplex by one user of a CDMA terminal apparatus. Because the transmission symbol speed of the control channel (DPCCH) is 15 kbps, the spreading factor thereof is 256. On the other hand, because the transmission symbol speeds of the data channels (DPDCH₁ to DPDCH₃) are 960 kbps, the spreading factors of them are 4.

Here, the orthogonal codes are denoted by "Cch, SF and k" (k denotes code number of the orthogonal codes). Each channel is identified by the execution of the following operations. That is, the control channel (DPCCH) is multiplied by a 0^{th} orthogonal code (Cch, 256,0) for the spreading factor of 256; a first data channel (DPDCH₁) and a second data channel (DPDCH₂) are severally multiplied by a 1^{st} orthogonal code (Cch, 4, 1) for the spreading factor of 4; and a third data channel (DPDCH₃) is multiplied by a 3^{rd} orthogonal code (Cch, 4, 3) for the spreading factor of 4.

An allotment of the orthogonal codes complies with the code arrangement disclosed in "3G TS 25.213 v3.1.1" (Dec. in 1999), the technical specifications of "3^{rd} generation partnership project (3GPP)", (see Fig. 1 and Paragraph 4.3.1.2 of the technical specifications).

Incidentally, although the first data channel (DPDCH₁) and the second data channel (DPDCH₂) are multiplied by the same orthogonal code, because I and Q are orthogonalized on a complex plane, these data channels may be identified easily.

Furthermore, in Figure 1, âc and âd are parameters (gain factors) for adjusting the relative values of the transmission electric power of the control channel (DPCCH) and the data channels (DPDCH₁ to DPDCH₃), respectively, and the âc and âd are severally determined to be a prescribed value. For example, âc is 0.26667 and âd is 1.0000. "Sdpch, n" denotes a scramble code that will be described later. The reason why the gain adjustments are performed by means of the âc and the âd is to make the energy per one bit of transmission data equal.

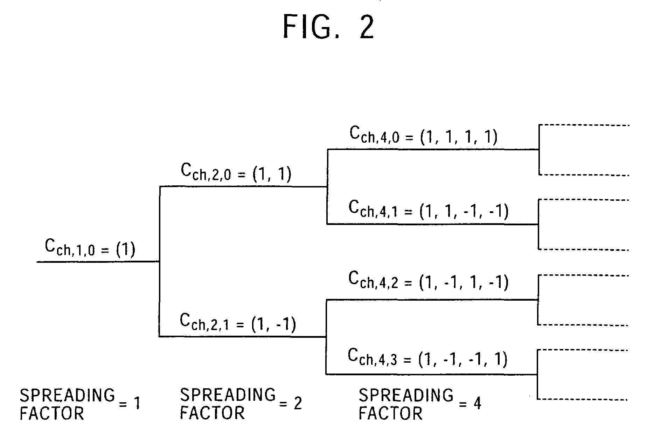

Figure 2 is a diagram for illustrating the orthogonal codes stipulated in the aforesaid "3GPP". Among the orthogonal codes arranged like a tree shown in the figure, a 0^{th} orthogonal code (Cch, 4, 0) for the spreading factor of 4 is [1, 1, 1, 1]; the 1^{st} orthogonal code (Cch, 4, 1) for the spreading factor of 4 is [1, 1, -1, -1]; a 2^{nd} orthogonal code (Cch, 4, 2) for the spreading factor of 4 is [1, -1, 1, -1]; and the 3^{rd} orthogonal code (Cch, 4,3) for the spreading factor of 4 is [1, -1, -1, 1]. Incidentally, the 0^{th} orthogonal code (Cch, 256, 0) for the spreading factor of 256 is a code in which 256 of "1" continues one after another such like [1, 1, 1, 1, 1 ... 1], although it is not shown in Figure 2.

Each orthogonal code is characterized in that they have no correlation in the case where their spreading factors are the same and their numbers are different from each other, and that, because they form a code system in the shape of a tree as shown in Figure 2, an orthogonal code before a branch point and an orthogonal code after the branch point have correlation. Because the correlation is obtained by the calculation of the sum of products every chip of a code, for example, if the sum of products of the 0^{th} orthogonal code for the spreading factor of 4 and the 1^{st} orthogonal code for the spreading factor of 4 is calculated, the result is 1 × 1 + 1 × 1 + 1 × -1 + 1 × -1 = 0. Consequently, it may be ascertained that these codes have no correlation to each other.

However, correlation is produced between the 0^{th} orthogonal code (Cch, 256, 0) for the spreading factor of 256 and the 0^{th} orthogonal code (Cch, 4, 0) for the spreading factor of 4. If the confirmation of this is tried by the calculation of the sum of products, the sum of products is 1 × 1 + 1 × 1 + 1 × 1 + 1 × 1 = 4, and thereby the existence of the correlation is evident.

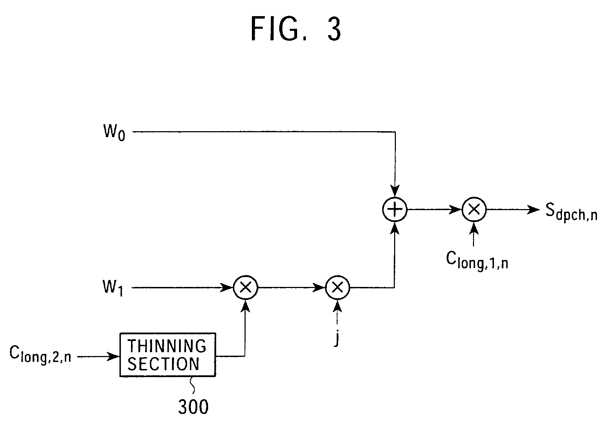

Figure 3 is a diagram for illustrating the scramble code (Sdpch, n). The C_{long,1,n} in the figure indicates a Gold sequence, and the C_{long,2,n} in the figure indicates another Gold sequence different in phase from the C_{long,1,n}. A thinning section 300 thins an input C_{long,2,n} every second chip, and fill blanks by outputting the same code repeatedly. For example, if an input code is [1, -1, -1, 1], the output is [1, 1, -1, -1].

W₀ and W₁ are repetitions of a fixed complex pattern called as a Walsh rotator. The real part of the complex pattern is W₀ = [1, 1] and the complex part thereof is W₁ = [1, -1]. The complex pattern of the first chip is 1 + j, and the complex pattern of the second chip is 1 - j. W₀ and W₁ repeat the complex patterns 1 + j and 1 - j alternately. For example, in the case where a code staying over two chips continuously at the same coordinates (1+j) on a complex plane exists, the result of their multiplications are portioned out to coordinates different in phase by 90 degrees on the complex plane such that the result in the first chip becomes (1 + j) × (1 + j) = j2 and the result in the second chip becomes (1 + j) × (1 - j) = 2. This fact indicates that the role of the Walsh rotator is to prevent the change of the phase from being 0 degrees in the transition between two chips.

As another example, in the case where a code that transits to the point symmetry coordinates through the origin on a complex plane exists such that the code is (1 + j) in the first chip and is (-1 - j) in the second chip, the result of the multiplications are portioned out to coordinates different in phase by 90 degrees on the complex plane such that the result in the first chip becomes (1 + j) × (1 + j) = j2 and the result in the second chip becomes (-1 - j) × (1 - j) = -2. This fact indicates that the Walsh rotator prevents the change of the phase from being 180 degrees in the transition between two chips.

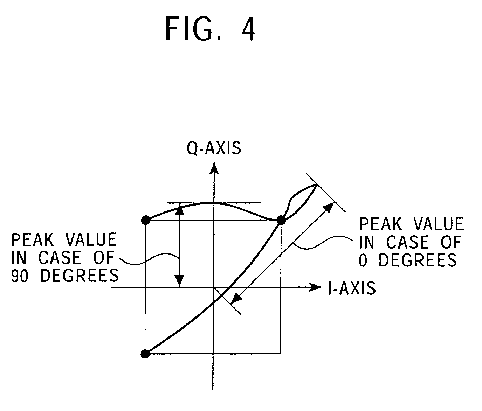

Figure 4 is a diagram showing a relation between the changes of phases between chips and loci after pulse shaping on a complex plane. As shown in the figure, peak values produced on the loci differ in the case where the change of phases between chips is 90 degrees and in the case where the change of phases between chips is 0 degrees, and a peak value owing to an overshoot becomes large in case of 0 degrees. This is a cause of distortions of a power amplifier to be used for power amplification. Accordingly, when the generation of peak value owing to an overshoot is prevented, the envelope changes of transmission electric power may be reduced, and the burden of linearity of the power amplifier for the use of power amplification is reduced. The modulation system that is spread with such a scramble code is called as hybrid phase shift keying (HPSK).

However, if there is a code transits of 90 degrees on a complex plane like (1 + j) in the first chip and (-1 + j) in the second chip, the code becomes (1 + j) × (1 + j) = j2 in the first chip and (-1 + j) × (1 - j) = j2 in the second chip as the results of multiplications, and then the code becomes the same coordinates on the complex plane. That is, the phase change between two chips becomes 0 degrees.

Furthermore, as another example, if there is a code transits -90 degrees on a complex plane like (1 + j) in the first chip and (1 - j) in the second chip, the code becomes (1 + j) × (1 + j) = j2 in the first chip and (1 - j) × (1-j) = -j2 in the second chip as the results of multiplications. In this case, the code passes through the origin on the complex plane, and the phase change between two chips becomes 180 degrees. As described above, for the codes multiplied by the Walsh rotators, the condition for them to be HPSK is that the phase change between two chips is 0 degrees or 180 degrees.

However, the aforesaid multiple code multiplex of data channels has the following problems . Whether a code satisfies the condition of HPSK or not may be determined by the addition of the I phase-component and the Q phase-component of an orthogonal code to each other to obtain a phase on the complex plane, and by the examination of the phase difference between two chips. In the case shown in Figure 1, the determination is performed as follows.

In Figure 1, on the I-axis side, the 1^{st} data channel (DPDCH₁) uses the 1^{st} orthogonal code (Cch, 4, 1) for the spreading factor of 4, and the 3^{rd} data channel (DPDCH₃) uses the 3^{rd} orthogonal code (Cch, 4, 3) for the spreading factor of 4. On the other side, on the Q-axis side, the control channel (DPCCH) uses the 0^{th} orthogonal code (Cch, 256, 0) for the spreading factor of 256, and the 2^{nd} data channel (DPDCH₂) uses the 1^{st} orthogonal code (Cch, 4, 1) for the spreading factor of 4. Incidentally, as described above, because the parameter âc of the control channel (DPCCH) is smaller than the parameter âd of data channels, hereupon, consideration is made with omission of the orthogonal code (Cch, 256, 0) of the control channel (DPCCH).

Accordingly, the results of the investigation with regard to the changing way of each orthogonal code at every third chip are as follows. That is, as for the first chip, because the 1^{st} data channel is 1 and the 3^{rd} data channel is 1, the real part is 1 + 1 = 2, and because the 2^{nd} data channel is 1, the imaginary part is 1, and then the phase of the code is arctan (1/2) = 26.6 degrees.

As for the 2^{nd} chip, because the 1^{st} data channel is 1 and the 3^{rd} data channel is -1, the real part is 1 - 1 = 0, and because the 2^{nd} data channel is 1, the imaginary part is 1, and then the phase of the code is arctan (1/0) = 90 degrees. Consequently, the change of the phases between these two chips is 90 - 26.6 = 63.4 degrees. Similarly, when the phase change from the 3^{rd} chip to the 4^{th} chip is investigated, because the phase difference is 63.4 degrees, it may be known that all of the aforementioned cases do not satisfy the condition that the phase difference is 0 degrees or 180 degrees.

According to the above consideration, the configuration example shown in Figure 1 has a problem such that, when three data channels are multiplexed, the orthogonal codes to be used do not satisfy the HPSK condition. As the result, it may be known that peak values of the envelope changes of transmission electric power are large.

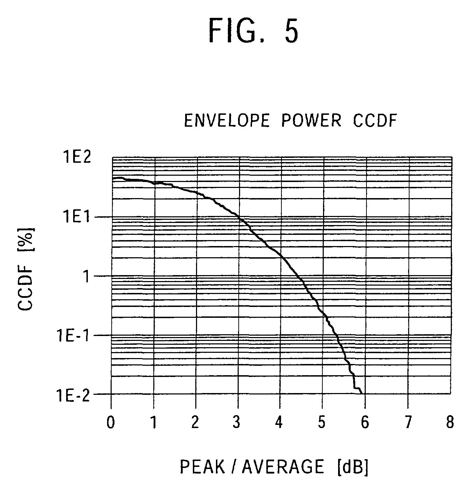

Figure 5 shows a result of a simulation of the statistical distribution of the ratios of the peak power to the average power of transmission electric power with regard to the configuration example shown in Figure 1. The simulation conditions here are as follows. That is, random data are used as information symbols, and the electric power of the control channel (DPCCH) is set to be lower than the electric power of the data channels (DPDCH₁ to DPDCH₃) by 11.48 dB. It may be known that, in the simulation results , peak power equal to or more than 5.4 dB occurs at the probability of 0.1 %.

A power amplifier for the use of power amplification has the following problem. That is, the power amplifier becomes unable to keep its input-output linearity to amplitudes exceeding a specific extent, and neighborhood spectra grow owing to non-linear distortions, and adjacent channel leakage power becomes large, and consequently the amount of interference to adjacent frequency bands becomes large. Accordingly, for the avoidance of the increase of the adjacent channel leakage power levels, it is necessary to improve the linearity of the power amplifier. For the improvement, problems such as the increase of its consumption electric power and its heat amount and the increases of its costs are produced. The aforesaid multiple code multiplex system of a data channel may not solve these problems.

### SUMMARY OF THE INVENTION

Various aspects and features of the present invention are defined in the appended claims.

The present invention was contemplated by considering aforesaid problems. Embodiments of the present invention can provide a CDMA spreading method and a CDMA terminal apparatus, capable of assigning orthogonal codes meeting the HPSK condition when a control channel and data channels are multiplexed by the multiple code multiplex to be transmitted.

Embodiments of the invention can also provide a CDMA spreading method and a CDMA terminal apparatus, capable of realizing the multiple code multiplex in low electric power consumption, a small physical configuration and low costs.

According to an aspect of the present invention, advantages are attained by the provision of a data spreading method for transmitting a plurality of data channels (DPDCHn: n indicates channel number) and a control channel (DPCCH) after performing multiple code multiplex of them by means of orthogonal codes, the method comprising: a first step for receiving data symbols of the plural data channels and the control channel; a second step for generating the orthogonal codes having a same spreading factor (SF); a third step for multiplying each of the data symbols of the plural data channels by orthogonal codes having a code number k being a positive integer within an extent of 0 ≤ k ≤ (SF/2) - 1 among the orthogonal codes; and a fourth step for multiplexing multiplication results generated at the third step to generate multiplex data.

According to another aspect of the invention, there is provided a data spreading method for transmitting a plurality of data channels (DPDCHn: n is a channel number) and a control channel (DPCCH) after performing multiple code multiplex of them by means of orthogonal codes, the method comprising: a first step for receiving data symbols of the plural data channels and the control channel; a second step for generating the orthogonal codes having a same spreading factor (SF); a third step for multiplying each of the data symbols of the plural data channels by orthogonal codes having a code number k being a positive integer within an extent of (SF/2) ≤ k ≤ SF - 1 among the orthogonal codes; and a fourth step for multiplexing multiplication results generated at the third step to generate multiplex data.

Moreover, according to a further aspect of the invention, there is provided a communication terminal apparatus for generating multiplex data by performing multiple code multiplex of a plurality of data channels (DPDCHn: n indicates channel number) and a control channel (DPCCH) by means of orthogonal codes and for performing transmission control of a signal consisting of the multiplex data to transmit a transmission signal, the apparatus comprising: reception means for receiving data symbols of the plural data channels and the control channel; orthogonal code generation means for generating the orthogonal codes having a same spreading factor (SF); first multiplication means for multiplying each of the data symbols of the plural data channels by orthogonal codes having a code number k being a positive integer within an extent of 0 ≤ k ≤ (SF/2) - 1 among the orthogonal codes; multiplex data generation means for generating multiplex data by multiplexing multiplication results generated by the first multiplication means; transmission control means for generating the transmission signal by performing transmission control of the signal consisting of the multiplex data; and signal output means for outputting the transmission signal.

According to a further aspect of the invention, there is provided a communication terminal apparatus for generating multiplex data by performing multiple code multiplex of a plurality of data channels (DPDCHn: n is a channel number) and a control channel (DPCCH) by means of orthogonal codes and for performing transmission control of a signal consisting of the multiplex data to transmit a transmission signal, the apparatus comprising: reception means for receiving data symbols of the plural data channels and the control channel; orthogonal code generation means for generating the orthogonal codes having a same spreading factor (SF); first multiplication means for multiplying each of the data symbols of the plural data channels by orthogonal codes having a code number k being a positive integer within an extent of (SF/2) ≤ k ≤ SF - 1 among the orthogonal codes; multiplex data generation means for multiplexing multiplication results generated by the first multiplication means to generate the multiplex data; transmission control means for performing the transmission control of the signal consisting of the multiplex data to generated the transmission signal; and signal output means for outputting the transmission signal.

### BRIEF DESCRIPTION OF THE DRAWINGS

The invention will now be described by way of example with reference to the accompanying drawings, throughout which like parts are referred to by like references, and in which:
Figure 1 is a diagram showing a configuration example of a multiple code multiplex;
Figure 2 is a diagram showing orthogonal codes by 3GPP;
Figure 3 is a diagram for illustrating a scramble code for the use of the multiple code multiplex;
Figure 4 is a diagram showing relations of changes of phase between chips and loci after pulse shaping on a complex plane;
Figure 5 is a diagram showing a result of a simulation of the statistical distribution of the ratios of the peak power to the average power of transmission electric power by the multiple code multiplex;
Figure 6 is a block diagram showing a schematic configuration of a CDMA terminal apparatus according to Embodiment 1 of the present invention;
Figure 7 is a diagram showing the configuration of the code multiplex section of the CDMA terminal apparatus according to Embodiment 1;
Figure 8 is a drawing showing a result of a simulation of the statistical distribution of the ratios of the peak power to the average power of transmission electric power according to Embodiment 1;
Figure 9 is a diagram showing the configuration of a code multiplex section according to Embodiment 2 of the present invention;
Figure 10 is a drawing showing a result of a simulation of the statistical distribution of the ratios of the peak power to the average power of transmission electric power according to Embodiment 2;
Figure 11 is a diagram showing the configuration of a code multiplex section according to Embodiment 3 of the present invention; and
Figure 12 is a drawing showing a result of a simulation of the statistical distribution of the ratios of the peak power to the average power of transmission electric power according to Embodiment 3.

### DESCRIPTION OF THE PREFERRED EMBODIMENTS

Hereinafter, embodiments of the present invention will be described in detail by reference to the attached drawings.

This application claims priority to Japanese Patent Application JP 2000-216776, and the disclosure of that application is incorporated herein by reference to the extent permitted by law.

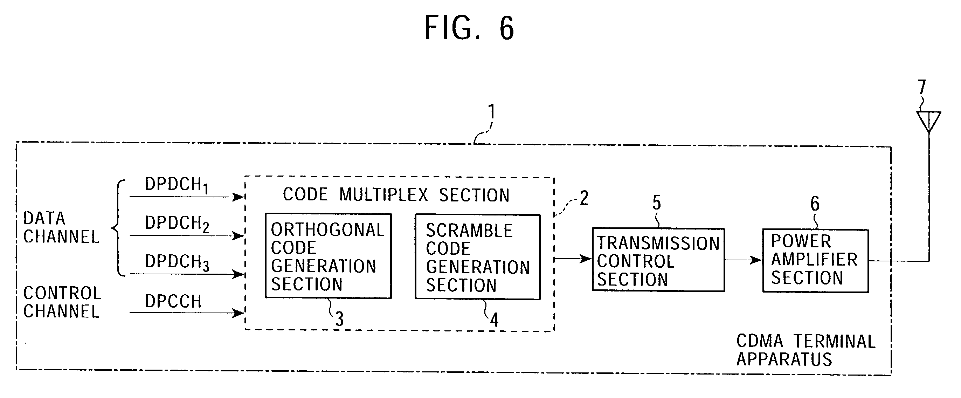

Figure 6 is a block diagram showing a schematic configuration of a CDMA terminal apparatus according to Embodiment 1 of the present invention. The CDMA terminal apparatus 1 shown in the figure includes a code multiplex section 2 for performing multiple code multiplex that will be described later, a transmission control section 5 for performing the transmission control of a signal consisting of a multiplex code, a power amplifier section 6 for performing the power amplification of a transmission signal, and an antenna 7.

The code multiplex section 2 includes an orthogonal code generation section 3 for generating a plurality of orthogonal codes having a prescribed spreading factor (4 in this case), and a scramble code generation section 4 for generating the aforesaid scramble codes. The code multiplex section 2 performs the multiplication of input data channels (DPDCH₁ to DPDCH₃) and a control channel (DPCCH) by these codes and other operations.

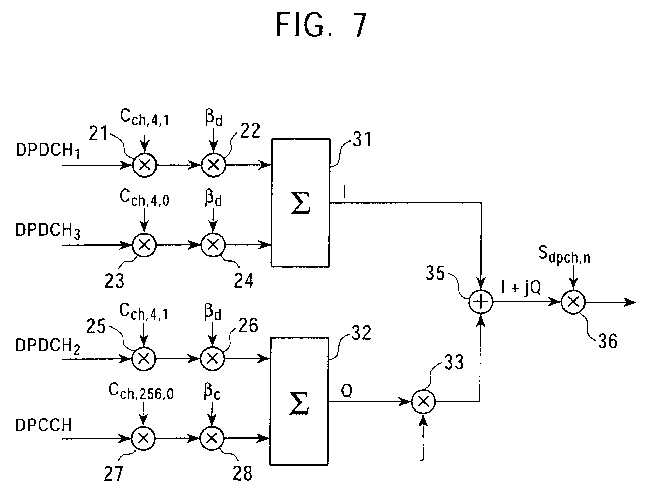

Figure 7 shows the configuration of the code multiplex section 2 of the CDMA terminal apparatus 1 according to the present Embodiment 1. The basic configuration of the code multiplex section 2 shown in the figure is the same as that of the configuration example of the multiple code multiplex shown in Figure 1. That is, because the spread code speed is 3.84 Mcps and the transmission symbol speed of the control channel (DPCCH) is 15 kbps hereupon also, the spreading factor (SF) is 256. Moreover, because the transmission symbol speeds of the data channels (DPDCH₁ to DPDCH₃) are 960 kbps, the spreading factor is 4.

However, the code multiplex section 2 according to the present embodiment greatly different from the multiple code multiplex configuration described in the Description of the Related Art section in a way of the assignment of the orthogonal codes. To put it concretely, when the orthogonal codes are expressed by Cch, SF, k (k is the code number of an orthogonal code), each channel is identified as follows. That is, as shown in Figure 7, the control channel (DPCCH) is multiplied by the 0^{th} orthogonal code (Cch, 256, 0) for the spreading factor of 256 by a multiplier 27, and the 1^{st} data channel (DPDCH₁) and the 2^{nd} data channel (DPDCH₂) are severally multiplied by the 1^{st} orthogonal code (Cch, 4, 1) for the spreading factor of 4 by multipliers 21 and 25, respectively. Then, the 3^{rd} data channel (DPDCH₃) is multiplied by the 0^{th} orthogonal code (Cch, 4, 0) for the spreading factor of 4 by a multiplier 23.

Although the control channel (DPCCH) and the 3^{rd} data channel, and the 1^{st} data channel (DPDCH₁) and the 2^{nd} data channel (DPDCH₂) are severally multiplied the same orthogonal codes, because the I-axis and the Q-axis are perpendicular to each other on a complex plane, each channel may be identified without any problem.

The results of the aforesaid multiplications are further multiplied by the aforesaid relative value adjustment parameter âc or âd of transmission electric power by a multiplier 22, 24, 26 or 28, severally. The result of each multiplication is added up by adding up devices 31 and 32, and then an I-phase component and a Q-phase component are obtained. Then, for the treatment of the I-phase component and the Q-phase component as complex values, the Q-phase component is multiplied byj by a multiplier 33, and the result of the multiplication is added to the I-phase component by and adder 35.

The signal (I + jQ), which was obtained in such a way, is multiplied by the scramble code (Sdpch, n) by a multiplier 36. Because the scramble code (Sdpch, n) is the same as the scramble code (Sdpch, n) described by reference to Figure 3, the description thereof is omitted here.

Because the transmit period of time of the data of the control channel (DPCCH) is longer than those of the data channels (DPDCH), it is necessary to decrease the transmission electric power of the control channel (DPCCH) in order that the energy per one bit of transmission data is made to be equal. Accordingly, for gain adjustment, a smaller value is used as the relative value adjustment parameter âc of transmission electric power in comparison with the relative value adjustment parameter âd.

As described above, because the relative value adjustment parameter âc of the control channel (DPCCH) is smaller than the relative value adjustment parameter âd of the data channels (DPDCH), the orthogonal code (Cch, 256, 0) of the control channel (DPCCH) is omitted for simplification, and then it is examined how each orthogonal code changes every other chip. That is, when orthogonal codes shown in Figure 2 is referred, in a first chip, because the 1^{st} data channel (DPDCH₁) is 1 (the 1^{st} data channel (DPDCH₁) is multiplied by the orthogonal code (Cch, 4, 1) = (1, 1, -1, -1)) and the 3^{rd} data channel (DPDCH₃) is 1 (the 3^{rd} data channel (DPDCH₃) is multiplied by the orthogonal code (Cch, 4, 0) = (1, 1, 1, 1)), the real part is 1 + 1 = 2, and because the 2^{nd} data channel (DPDCH₂) is 1 (the 2^{nd} data channel multiplied by the orthogonal code (Cch, 4, 1) = (1, 1, -1, -1)), the imaginary part is 1. Consequently, the phase is arctan(1/2) = 26.6 degrees.

In the second chip, because the 1^{st} data channel is 1 and the 3^{rd} data channel is 1, the real part is 1 + 1 = 2, and because the 2^{nd} data channel is 1, the imaginary part is 1. Consequently, in this case also the phase is arctan(1/2) = 26.6 degrees. Consequently, the change of phases between these two chips is 26.6 - 26.6 = 0 degrees.

Similarly, when the change of the orthogonal codes between the third chip and the fourth chip is examined, the change of phases between chips is 0 degrees. This fact means that the changes of the orthogonal codes in both cases meet the HPSK condition.

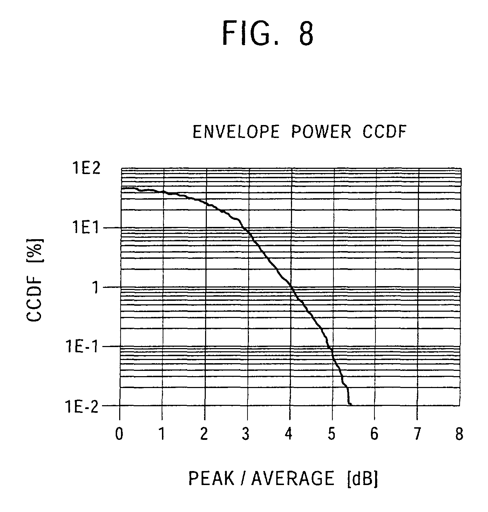

The graph shown in Figure 8 shows the result of a simulation of the statistical distribution of the ratios of the peak power to the average power of transmission electric power of the code multiplex according to the present Embodiment 1. Incidentally, the conditions of simulation in this case are the same conditions of the simulation shown in Figure 5.

In Figure 8, CCDF of the ordinate axis (in logarithmic scale) indicates frequency rate exceeding average power, which is considered on the basis of 1E - 1 [%] here, i.e. 0.1 [%]. Consequently, in case of the present Embodiment 1, it is known from a simulation result shown in Figure 8 that the peak power equal to or more than 4.9 dB is generated at the provability of 0.1 %. This indicates the improvement by 0.5 dB in comparison with the provability shown in Figure 5.

As described above, according to the present embodiment, the multiplication is performed by assigning the 0^{th} orthogonal code (Cch, 256, 0) for the spreading factor of 256 to the control channel (DPCCH), and by assigning the 1^{st} orthogonal code (Cch, 4, 1) for the spreading factor of 4 to the first data channel (DPDCH₁) and the second data channel (DPDCH₂), and further by assigning the 0^{th} orthogonal code (Cch, 4, 0) for the spreading factor of 4 to the third data channel (DPDCH₃), for performing the multiple code multiplex, and then these orthogonal codes meet the HPSK condition, and the peak values of the envelope changes of transmission electric power may be reduced.

Although a case where the spreading factor is four is described in the present embodiment, the present invention is not limited to the case, and the invention may be applied to cases of the other spreading factors. Now, when the spreading factor is generally expressed as SF, an orthogonal code having a code number k being a positive integer within an extent of 0 ≤ k ≤ (SF/2) - 1 is selected as an orthogonal code by which each data channel is multiplied. If a case where the spreading factor is 4 is inspected, because SF/2 - 1 = 1, k = 0 or 1, which conforms to the aforesaid present embodiment.

Moreover, because the peak values of envelope changes of transmission electric power do not become excessively large, there may be obtained advantages that the growth of neighborhood spectra owing to non-linear distortions of a power amplifier to be used for power amplification of the CDMA terminal apparatus is decreased to reduce the adjacent channel leakage power.

Moreover, because the problems that the apparatus described in the Description of the Related Art section has such as the increase of the electric power consumption and the heat amount for the improvement of the linearity of a power amplifier and the increase of costs is solved by the decrease of adjacent channel leakage power levels, it becomes possible to provide a CDMA terminal apparatus with a smaller size that consumes lower electric power may be made in low costs.

### <EMBODIMENT 2>

Hereinafter, Embodiment 2 of the present invention is described. Incidentally, because the configuration of the CDMA terminal apparatus according to the present embodiment is the same as that of the CDMA terminal apparatus of the aforesaid Embodiment 1 shown in Figure 6, the illustration and the description of the configuration is omitted.

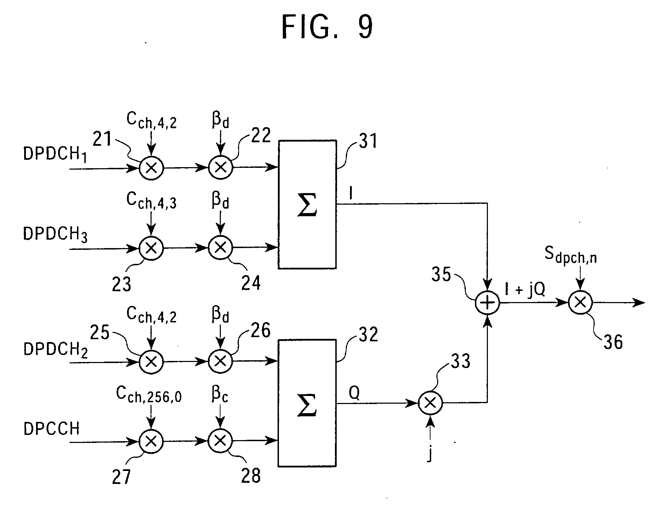

Figure 9 shows the configuration of the code multiplex section of the CDMA terminal apparatus according to the present embodiment. In Figure 9, the same configuration elements as those of the code multiplex section according to Embodiment 1 shown in Figure 7 are designated by the same reference marks. Hereupon also, because its spread code speed is 3.84 Mcps and the transmission symbol speed of the control channel (DPCCH) is 15 kbps, the spreading factor is 256. Moreover, because the transmission symbol speeds of the data channels (DPDCH₁ to DPDCH₃) are 960 kbps, the spreading factor is 4.

The assigning method of the orthogonal codes in the code multiplex section according to the present embodiment is as follows. That is, the 0^{th} orthogonal code (Cch, 256, 0) for the spreading factor 256 is assigned to the control channel (DPCCH), and the first data channel (DPDCH₁) and the second data channel (DPDCH₂) are multiplied by the 2^{nd} orthogonal code (Cch, 4, 2) for the spreading factor of 4, and further the third data channel (DPDCH₃) is multiplied by the 3^{rd} orthogonal code (Cch, 4, 3) for the spreading factor of 4 to identify each channel.

Incidentally, although the control channel (DPCCH) and the third data channel, and the first data channel (DPDCH₁) and the second data channel (DPDCH₂) are multiplied by the same orthogonal codes, severally, because the I-axis and the Q-axis are orthogonalized on a complex plane, these data channels may be identified easily.

With regard to the parameters âmayd âd for transmission electric power adjustment, because the parameter âc of the control channel (DPCCH) is smaller than the parameter âd of the data channels, the orthogonal code of the control channel is omitted for simplification, and then it is examined how each of the other orthogonal codes changes every other chip. In case of the present embodiment, in a first chip, because the 1^{st} data channel (DPDCH₁) is 1 (the 1^{st} data channel (DPDCH₁) is multiplied by the orthogonal code (Cch, 4, 2) = (1, -1, 1, -1)) and the 3^{rd} data channel (DPDCH₃) is 1 (the 3^{rd} data channel (DPDCH₃) is multiplied by the orthogonal code (Cch, 4, 3) = (1, -1, -1, 1)), the real part is 1 + 1 = 2, and because the 2^{nd} data channel (DPDCH₂) is 1 (the 2^{nd} data channel is multiplied by the orthogonal code (Cch, 4, 2) = (1, -1, 1, -1)), the imaginary part is 1. Consequently, the phase is arctan(1/2) = 26.6 degrees.

In the second chip, because the 1^{st} data channel is -1 and the 3^{rd} data channel is -1, the real part is -1 - 1 = -2, and because the 2^{nd} data channel is -1, the imaginary part is -1. Consequently, the phase is arctan(1/2) - π = -153.4 degrees. Consequently, the change of phases between these two chips is 26.6 - (-153.4) = 180 degrees.

Similarly, when the change of the orthogonal codes between the third chip and the fourth chip is examined, because the change of the phases between the chips are 180 degrees, both of the aforesaid cases meet the HPSK condition.

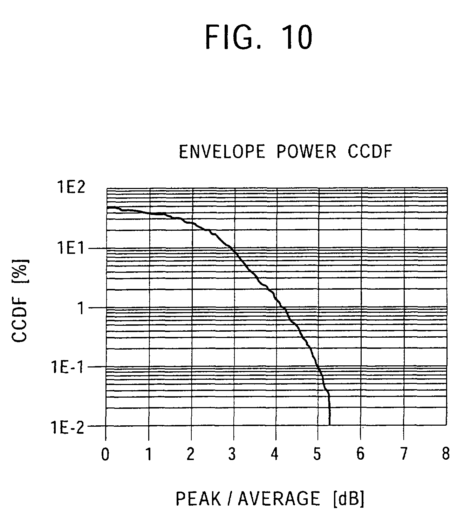

Figure 10 is a graph showing the result of a simulation of the statistical distribution of the ratios of the peak power to the average power of transmission electric power of the code multiplex according to the present Embodiment 2. The conditions of simulation in this case are the same conditions of the aforesaid simulation described in the Description of the Related Art section.

According to the simulation result, the peak power larger than 4.95 dB is generated at the provability of 0.1 %. This indicates the improvement amount is less than the simulation result in the aforesaid Embodiment 1, however the provability is improved by 0.45 dB in comparison with the provability, which is shown in Figure 5, of the aforementioned multiple code multiplex.

As described above, according to the present embodiment, the multiplication is performed by assigning the 0^{th} orthogonal code (Cch, 256, 0) for the spreading factor of 256 to the control channel (DPCCH), and by assigning the 2^{nd} orthogonal code (Cch, 4, 2) for the spreading factor of 4 to the first data channel (DPDCH₁) and the second data channel (DPDCH₂), and further by assigning the 3^{rd} orthogonal code (Cch, 4, 3) for the spreading factor of 4 to the third data channel (DPDCH₃), for performing the multiple code multiplex, and then these orthogonal codes meet the HPSK condition, and the peak values of the envelope changes of transmission electric power may be reduced.

Although a case where the spreading factor is four is described in the present embodiment, the present invention is not limited to the case, and the invention may be applied to cases of the other spreading factors. Now, when the spreading factor is generally expressed as SF, an orthogonal code having a code number k being a positive integer within an extent of SF/2 ≤ k ≤ SF - 1 is selected as an orthogonal code by which each data channel is multiplied. When a case where the spreading factor is 4 is inspected, because SF/2 = 2 and SF -1 = 3, k = 2 or 3, which conforms to the aforesaid present embodiment.

Moreover, it is also quite true like in the aforesaid Embodiment 1 that the adjacent channel leakage power becomes small because non-linear distortions of a power amplifier of the CDMA terminal apparatus is removed to make it possible to provide a CDMA terminal apparatus that consumes low electric power and has a small size and further may be made in low costs as the result.

### <EMBODIMENT 3>

Hereinafter, Embodiment 3 of the present invention is described. Incidentally, because the configuration of the CDMA terminal apparatus according to the present embodiment is also the same as that of the CDMA terminal apparatus of the aforesaid Embodiment 1 shown in Figure 6, the illustration and the description of the configuration is omitted.

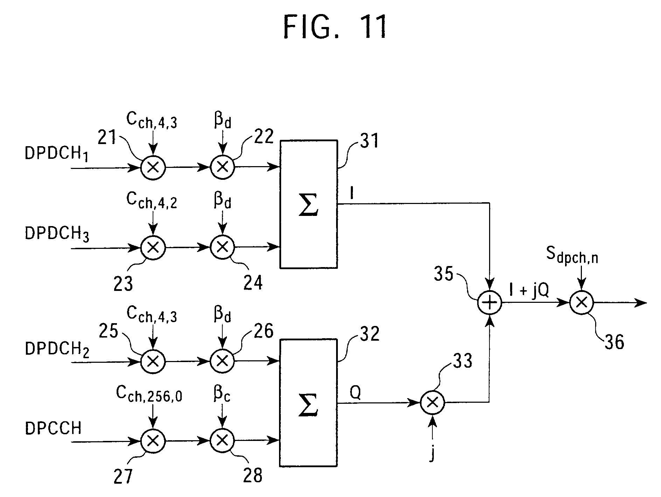

Figure 11 shows the configuration of the code multiplex section of the CDMA terminal apparatus according to the present embodiment. In Figure 11, the same configuration elements as those of the code multiplex section according to Embodiment 1 shown in Figure 7 are designated by the same reference marks. Hereupon, because its spread code speed is 3.84 Mcps and the transmission symbol speed of the control channel (DPCCH) is 15 kbps, the spreading factor is 256. Moreover, because the transmission symbol speeds of the data channels (DPDCH₁ to DPDCH₃) are 960 kbps, the spreading factor is 4.

The orthogonal codes are assigned as follows in the code multiplex section according to the present embodiment. That is, the control channel (DPCCH) is multiplied by the 0^{th} orthogonal code (Cch, 256, 0) for the spreading factor 256; the first data channel (DPDCH₁) and the second data channel (DPDCH₂) are multiplied by the 3^{rd} orthogonal code (Cch, 4, 3) for the spreading factor of 4; and the third data channel (DPDCH₃) is multiplied by the 2^{nd} orthogonal code (Cch, 4, 2) for the spreading factor of 4 to identify each channel.

Incidentally, although the control channel (DPCCH) and the third data channel (DPDCH₃), and the first data channel (DPDCH₁) and the second data channel (DPDCH₂) are multiplied by the same orthogonal codes, severally, because the I-axis and the Q-axis are orthogonalized on a complex plane, these data channels may be identified easily.

As described above, with regard to the parameters âmayd âd for transmission electric power adjustment, because the parameter âc of the control channel (DPCCH) is smaller than the parameter âd of the data channels (DPDCH₁ to DPDCH₃), the orthogonal code (Cch, 256, 0) of the control channel (DPCCH) is omitted for simplification, and then it is examined how each of the other orthogonal codes changes every other chip. As the result, in a first chip, because the 1^{st} data channel (DPDCH₁) is 1 (the 1^{st} data channel (DPDCH₁) is multiplied by the orthogonal code (Cch, 4, 3) = (1, -1, -1, 1)) and the 3^{rd} data channel (DPDCH₃) is 1 (the 3^{rd} data channel (DPDCH₃) is multiplied by the orthogonal code (Cch, 4, 2) = (1, -1, 1, -1)), the real part is 1 + 1 = 2, and because the 2^{nd} data channel (DPDCH₂) is 1 (the 2^{nd} data channel is multiplied by the orthogonal code (Cch, 4, 3) = (1, -1, -1, 1)), the imaginary part is 1. Consequently, the phase is arctan(1/2) = 26.6 degrees.

In the second chip, because the 1^{st} data channel is -1 and the 3^{rd} data channel is -1, the real part is -1 - 1 = -2, and because the 2^{nd} data channel is -1, the imaginary part is -1. Consequently, the phase is arctan(1/2) - π = -153.4 degrees. Consequently, the change of phases between these two chips is 26.6 - (-153.4) = 180 degrees.

Similarly, when the change of the orthogonal codes between the third chip and the fourth chip is examined, because the change of the phases between chips are 180 degrees, both of the aforesaid cases meet the HPSK condition. This fact is directly connected with the decrease of the peak values of the envelope changes of transmission electric power.

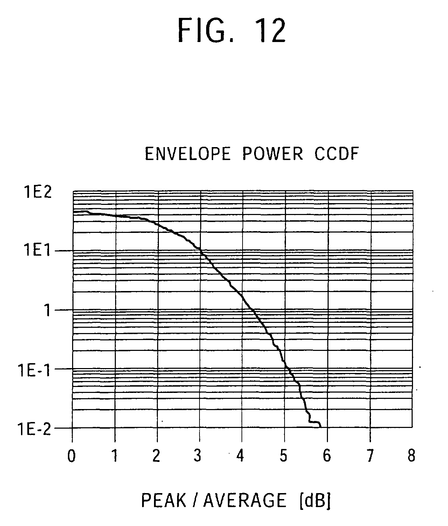

The graph shown in Figure 12 shows the result of a simulation of the statistical distribution of the ratios of the peak power to the average power of transmission electric power of the code multiplex according to the present Embodiment 3. The conditions of the simulation in this case are the same conditions of the aforesaid simulation described in the Description of the Related Art section.

In the simulation result of the present Embodiment 3, because the peak power larger than 5.0 dB is generated at the provability of 0.1 %, though the improvement amount is less than the simulation result in Embodiment 1, the provability is improved by 0.4 dB in comparison with the provability, which is shown in Figure 5, of the aforementioned multiple code multiplex.

As described above, according to the present embodiment, the multiplication is performed by assigning the 0^{th} orthogonal code (Cch, 256, 0) for the spreading factor of 256 to the control channel (DPCCH), and by assigning the 3^{rd} orthogonal code (Cch, 4, 3) for the spreading factor of 4 to the first data channel (DPDCH₁) and the second data channel (DPDCH₂), and further by assigning the 2^{nd} orthogonal code (Cch, 4, 2) for the spreading factor of 4 to the third data channel (DPDCH₃), for performing the multiple code multiplex, and then these orthogonal codes meet the HPSK condition, and the peak values of the envelope changes of transmission electric power may be reduced at the same time. In Embodiment 3, the expression when the orthogonal codes by which each channel is multiplied are generalized is the same as the expression in Embodiment 2.

Moreover, it is also quite true like in the aforesaid Embodiment 1 and Embodiment 2 that the adjacent channel leakage power becomes small owing to the aforesaid effects to make it possible to provide a CDMA terminal apparatus that consumes low electric power and has a small size and further may be made in low costs.

Incidentally, although the control channel is used for configuring the imaginary part of multiplex data (I + jQ) in the present embodiment, the present invention is not limited to such a case, and the control channel may be used for configuring the real part of the multiplex data.

As described above, according to the present invention, the multiple code multiplex of all of a plurality of data channels and a control channel is performed by means of orthogonal codes having a code number k being an integer within an extent of 0 ≤ k ≤ (SF/2) - 1 and having the same spreading factor (SF), and consequently the orthogonal codes to be used meet the HPSK condition, and further it may be prevented that the peak values of the envelope changes of transmission electric power become excessively large.

Furthermore, according to another invention, the multiple code multiplex of a plurality of data channels and a control channel is performed by means of orthogonal codes having a code number k being an integer within an extent of (SF/2) ≤ k ≤ SF - 1 and having the same spreading factor (SF), and consequently the orthogonal codes to be used meet the HPSK condition. Thereby, it may be prevented that the peak values of the envelope changes of transmission electric power become excessively large.

Furthermore, according to further invention, because the growth of neighborhood spectra owing to non-linear distortions of a power amplifier to be used for power amplification is decreased and thereby the problems such as the increase of the consumption electric power and the heat amount that is consumed for the improvement of the linearity of a power amplifier and the increase of costs is solved, it becomes possible to provide a CDMA terminal apparatus that consumes lower electric power and has a smaller size and further may be made in lower costs.

While the preferred embodiments for carrying out the invention have been described in detail, those familiar with the art to which the invention relates will recognize various alternative designs and embodiments for practicing the invention.

These alternative embodiments are within the scope of the present invention. Accordingly, the scope of the present invention embodies the scope of the claims appended hereto.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Various different aspects and features of the present invention are defined in the appended claims. Combinations of features from the dependent claims may be combined with features of the independent claims as appropriate and not merely as explicitly set out in the claims.

## Claims

1. A data spreading method for transmitting a plurality of data channels (DPDCHn: n indicates channel number) and a control channel (DPCCH) after performing multiple code multiplex of them by means of orthogonal codes, said method comprising:
a first step for receiving data symbols of the plural data channels and the control channel;
a second step for generating the orthogonal codes having a same spreading factor (SF);
a third step for multiplying each of the data symbols of the plural data channels by orthogonal codes having a code number k being a positive integer within an extent of 0 ≤ k ≤ (SF/2) - 1 among the orthogonal codes; and
a fourth step for multiplexing multiplication results generated at said third step to generate multiplex data.

2. The data spreading method according to claim 1, said method further comprising:
a fifth step for generating scramble data by multiplying the multiplex data by a scramble code.

3. The data spreading method according to claim 1, said method further comprising:
a sixth step for multiplying the data symbols of the control channel by the orthogonal codes for the control channel, wherein
at said fourth step multiplication results generated at said third step and said sixth step are multiplexed.

4. The data spreading method according to claim 3, wherein:
the spreading factor SF is four; and
at said third step a first data channel and a second data channel are severally multiplied by a first orthogonal code for the spreading factor of four, and a third data channel is multiplied by a zeroth orthogonal code for the spreading factor of four.

5. The data spreading method according to claim 4, wherein:
at said sixth step the control channel is multiplied by a zeroth orthogonal code for a spreading factor of 256.

6. A data spreading method for transmitting a plurality of data channels (DPDCHn: n is a channel number) and a control channel (DPCCH) after performing multiple code multiplex of them by means of orthogonal codes, said method comprising:
a first step for receiving data symbols of the plural data channels and the control channel;
a second step for generating the orthogonal codes having a same spreading factor (SF);
a third step for multiplying each of the data symbols of the plural data channels by orthogonal codes having a code number k being a positive integer within an extent of (SF/2) ≤ k ≤ SF - 1 among the orthogonal codes; and
a fourth step for multiplexing multiplication results generated at said third step to generate multiplex data.

7. The data spreading method according to claim 6, said method further comprising:
a fifth step for generating scramble data by multiplying the multiplex data by a scramble code.

8. The data spreading method according to claim 6, said method further comprising:
a sixth step for multiplying the data symbols of the control channel by the orthogonal codes for the control channel, wherein
at said fourth step multiplication results generated at said third step and said sixth step are multiplexed.

9. The data spreading method according to claim 8, wherein:
the spreading factor SF is four; and
at said third step a first data channel and a second data channel are severally multiplied by a second orthogonal code for the spreading factor of four, and a third data channel is multiplied by a third orthogonal code for the spreading factor of four.

10. The data spreading method according to claim 9, wherein:
at said sixth step the control channel is multiplied by a zeroth orthogonal code for a spreading factor of 256.

11. The data spreading method according to claim 8, wherein:
the spreading factor SF is four, and
at said third step the first data channel and the second data channel are severally multiplied by the third orthogonal code for the spreading factor of four, and the third data channel is multiplied by the second orthogonal code for the spreading factor of four.

12. The data spreading method according to claim 11, wherein:
at said sixth step the control channel is multiplied by a zeroth orthogonal code for a spreading factor of 256.

13. A communication terminal apparatus for generating multiplex data by performing multiple code multiplex of a plurality of data channels (DPDCHn: n indicates channel number) and a control channel (DPCCH) by means of orthogonal codes and for performing transmission control of a signal consisting of the multiplex data to transmit a transmission signal, said apparatus comprising:
reception means for receiving data symbols of the plural data channels and the control channel;
orthogonal code generation means for generating the orthogonal codes having a same spreading factor (SF);
first multiplication means for multiplying each of the data symbols of the plural data channels by orthogonal codes having a code number k being a positive integer within an extent of 0 ≤ k ≤ (SF/2) - 1 among the orthogonal codes;
multiplex data generation means for generating multiplex data by multiplexing multiplication results generated by said first multiplication means;
transmission control means for generating the transmission signal by performing transmission control of the signal consisting of the multiplex data; and
signal output means for outputting the transmission signal.

14. The communication terminal apparatus according to claim 13, said apparatus further comprising:
scramble data generation means for generating scramble data by multiplying the multiplex data by a scramble code.

15. The communication terminal apparatus according to claim 13, said apparatus further comprising:
second multiplication means for multiplying the data symbols of the control channel by the orthogonal codes for the control channel, wherein
said multiplex data generation means multiplexes multiplication results generated by and said first multiplication means and said second multiplication means.

16. The communication terminal apparatus according to claim 15, wherein:
the spreading factor SF is four; and
said first multiplication means multiplies a first data channel and a second data channel by a first orthogonal code for the spreading factor of four severally, and multiplies a third data channel by a zeroth orthogonal code for the spreading factor of four.

17. The communication terminal apparatus according to claim 16, wherein:
said second multiplication means multiplies the control channel by a zeroth orthogonal code for a spreading factor of 256.

18. A communication terminal apparatus for generating multiplex data by performing multiple code multiplex of a plurality of data channels (DPDCHn: n is a channel number) and a control channel (DPCCH) by means of orthogonal codes and for performing transmission control of a signal consisting of the multiplex data to transmit a transmission signal, said apparatus comprising:
reception means for receiving data symbols of the plural data channels and the control channel;
orthogonal code generation means for generating the orthogonal codes having a same spreading factor (SF);
first multiplication means for multiplying each of the data symbols of the plural data channels by orthogonal codes having a code number k being a positive integer within an extent of (SF/2) ≤ k ≤ SF - 1 among the orthogonal codes;
multiplex data generation means for multiplexing multiplication results generated by said first multiplication means to generate the multiplex data;
transmission control means for performing the transmission control of the signal consisting of the multiplex data to generated the transmission signal; and
signal output means for outputting the transmission signal.

19. The communication terminal apparatus according to claim 18, said apparatus further comprising:
scramble data generation means for generating scramble data by multiplying the multiplex data by a scramble code.

20. The communication terminal apparatus according to claim 18, said method further comprising:
second multiplication means for multiplying the data symbols of the control channel by the orthogonal codes for the control channel, wherein
said multiplex data generation means multiplexes multiplication results generated by said first multiplication means and said second multiplication means.

21. The communication terminal apparatus according to claim 20, wherein:
the spreading factor SF is four; and
said first multiplication means multiplies a first data channel and a second data channel by a second orthogonal code for the spreading factor of four severally, and multiplies a third data channel by a third orthogonal code for the spreading factor of four.

22. The communication terminal apparatus according to claim 21, wherein:
said second multiplication means multiplies the control channel by a zeroth orthogonal code for a spreading factor of 256.

23. The communication terminal apparatus according to claim 20, wherein:
the spreading factor SF is four, and
said first multiplication means multiplies the first data channel and the second data channel by the third orthogonal code for the spreading factor of four severally, and multiplies the third data channel by the second orthogonal code for the spreading factor of four.

24. The communication terminal apparatus according to claim 23, wherein:
said second multiplication means multiplies the control channel by a zeroth orthogonal code for a spreading factor of 256.
